# EUROPEAN PATENT SPECIFICATION

(11) **EP 3 132 669 B1**
(45) Date of publication and mention of the grant of the patent: **17.01.2018**
(21) Application number: 16184032.7
(22) Date of filing: 12.08.2016
(51) Int. Cl.: A01D 90/10, A23N 12/00, A01D 33/00

(54) **DEVICE AND METHOD FOR SEPARATING PLANT PRODUCTS OF ADMIXTURES**
VORRICHTUNG UND VERFAHREN ZUM TRENNEN VON PFLANZENPRODUKTEN VON ZUSCHLAGSTOFFEN
DISPOSITIF ET PROCÉDÉ POUR SÉPARER DES PRODUITS VÉGÉTAUX D'ADJUVANTS

(30) Priority: 21.08.2015 BE 201505522; 09.08.2016 NL 2017303
(43) Date of publication of application: 22.02.2017
(73) Proprietor: Dezeure NV, 8630 Veurne (BE)
(72) Inventor: Vansteenland, Julien, 8630 Veurne (BE); Dezeure, Eddy, 8630 Veurne (BE); Himpens, Siel, 8630 Veurne (BE)
(74) Representative: Brantsandpatents bvba

(56) References cited:
- EP-A1- 0 501 590
- FR-A- 1 085 828
- GB-A- 2 509 809
- US-A- 4 164 052

## Description

### TECHNICAL FlELD

The present invention relates to the temporary storage and transport of harvested plant products, e.g. vegetables and fruit, from admixtures and the removal of soil, clods, stones, foliage or similar material.

### BACKGROUND

When harvesting crops such as potatoes, carrots or beets, often a huge amount of soil from the lands comes along. Most harvesters take the product including the soil. These crops are transferred from the harvester to a loading wagon driving over the field next to the harvester, mostly pulled by a tractor. This loading wagon serves as a temporary storage for the harvested products, after which they can be transferred to a transport wagon that is ready at the side of the field. The latter subsequently serves for the transport of the products to the warehouse or the consumer.

However, transferring soil together with the agricultural products is undesired. On the one hand because of the fact that the transport of soil from one location to the other involves risks with respect to contamination by soil organisms, on the other hand because of economic reasons: it is evident that it is more advantageous to limit the transport of irrelevant side product such as soil as much as possible, as well as to reduce the number of transports. Moreover, a transporter will often be obliged to take back the side products such as soil after delivery of the products, or to pay for it. Above-mentioned problems make it clear that the soil which is still present on the potatoes or other plant products after harvesting, should ideally be removed as soon as possible and should be brought back locally.

In the state of the art, there are several separation devices to remove admixtures such as soil, clods, stones, foliage or similar material, but they are often installed at a certain distance from the exact harvesting location. In this case, there is a risk of infecting the soil at or around such separation device by non-local bacteria, fungi, nematodes etc. This should thus be avoided as much as possible.

Document EP0730399 describes for example a device for separating potatoes from admixtures such as soil, clods, stones, foliage or similar material, in particular for potato harvesters, that can be installed locally. The load is transferred onto the device, and the undesired admixtures such as soil are separated. However, this has the disadvantage that a lot of time is wasted during the cleaning of the load, and that this requires additional manpower. Moreover, a similar device is static and not mobile, as a result of which the soil will accumulate at the location where it has been installed. Hence, this again causes problems and mostly requires additional transport of the obtained soil.

Document DE202014105122 describes a device for receiving and transferring a load, provided with an inclined transferring device that transfers the load to a road transferring means. The products are transferred via an inclined surface from the device to the transferring means. Hereby, there is a minimal separation of soil and products, in which the products are brought into the transferring means and the soil falls down on the ground. Similar to the stationary device of the state of the art, here an accumulation of soil takes place locally. Again, this is not ideal and should be avoided. Because of the fact that the device from DE202014105122 cannot achieve a thin layer of products, the separation is often very poor or non-existent. Moreover, DE202014105122 does not relate to an overload trailer and thus does not offer a solution for efficient transport.

EP 0 501 509 A1 describes a bulk bin, which bulk bin is provided with two processing devices. Such a processing device is typically designed as a roller screen. Agricultural products are fed to these processing devices via the bulk bin discharge end.

GB 2 509 809 A discloses an ejector trailer having a discharging device for pushing the load out the back end of the trailer. Furthermore, the trailer is liftable to a desired discharge height.

FR 1 085 828 A describes a device for cleaning agricultural products such as beets and potatoes. In particular, the device in question has a separating function, whereby waste (e.g. soil) can be disposed of.

To date, no device seems to be known in the state of the art that allows to separate harvested plant products from remaining admixtures by means of a height-adjustable trailer, and optionally to collect these admixtures.
The present invention aims to provide a solution for one or more of the aforementioned problems or shortcomings.

### SUMMARY

The present invention provides in a first aspect an overload trailer for transferring harvested plant products from a harvester to a further transferring means, such as a further road or railway vehicle, according to claim 1.
In a second aspect, the present invention offers a method for separating, unloading and collecting harvested plant products and possible other residual admixtures, such as soil, clods, stones, foliage or similar material, according to claim 10.
In a third aspect, the present invention offers a separating device that is appropriate for attachment to a moveable device, according to claim 13.
The present invention has the advantage that the harvested plant products are separated from its admixtures at the harvesting location, in which the latter can be deposited again at the harvesting location. The present invention offers an economic advantage, as additional costs for the transport of the admixtures such as soil instead of the desired products are avoided. The device and method according to the present invention offers a very efficient and advantageous way for fast loading of a transferring means with plant products originating from a field, in which the number of transports is minimized.

### DESCRIPTION OF THE FIGURES

The explicit characteristics, advantages and objectives of the present invention will further become clear for the skilled person in the technical field of the invention after reading the following detailed description of the embodiment of the invention and the attached figures herein. The figures serve to further illustrate the invention, without thereby limiting the scope of the invention.
Figures 1A and 1B show a side view of an embodiment of the present invention in which the separation device is respectively in an operative and closed state.
Figure 2 shows a top view of an embodiment of the present invention.
Figure 3 shows a schematic representation of the rear side of an overload trailer according to a possible embodiment according to the present invention.
Figure 4 is a detailed view of a collection container according to the present invention.
Figure 5 shows a schematic representation of a separating process by means of a device of the present invention.
Figures 6A up to and including 6C show a detailed view of a possible embodiment of a separating device according to the present invention.
Figure 7 shows an overview representation of a device according to the present invention, provided with a means for concentrating the product flow.
Figure 8 is a detailed view of a possible embodiment of a separating device according to the present invention.
Figure 9 is an overview representation of a possible embodiment of the overload trailer according to the present invention.

### DETAILED DESCRIPTION OF THE INVENTION

Unless otherwise defined, all terms used in the description of the invention, including technical and scientific terms, have the meaning as they are generally understood by the skilled person in the technical field of the invention. For a better assessment of the description of the invention, the following terms are explained explicitly.

In a first aspect, the invention provides an overload trailer for the transfer of harvested plant products from a harvester to a further transferring means, such as a further road or railway vehicle, provided with a moveable frame onto which a loading container is provided with means for the discharge of the harvested products to a discharge end of the device, in which at the discharge end, a separating device is provided for separating the harvested plant products from possible remaining admixtures, such as soil, clods, stones, foliage or similar material.
The device offers a good separation of undesired admixtures and products, and this almost simultaneously with the transfer of the products to a transport wagon. This means a huge gain in time during the harvesting process. This also offers the advantage that the separated admixtures can be collected at the harvesting location and possibly can be dropped again on the soil, or can be transported to another location for further processing or usage. In this way, the risk of accidental infection of other soils by the bacteria, fungi, nematodes etc., which were originally present at the harvesting location, is reduced or avoided. To date, a similar process was not possible.
In a further preferred embodiment of the invention, the harvested plant products comprise plants from the family of potatoes (nightshades family/ Solanaceae) and carrots (Umbelliferae family/ Apiacae).
In a preferred embodiment of the invention, the means for discharging the harvested products comprise a moveable floor.
The moveable floor of the trailer is preferably provided with a drive chain to lead the harvested plant products and possible admixtures to the backside of the collection container, in the direction of the separating device. According to the the invention, the device is an overload trailer. Thereto, the invention provides means for lifting the trailer, as a result of which the trailer is brought into an angle with respect to the ground surface. In particular, the trailer is lifted by means of hydraulic rods coupled to the trailer and the moveable frame. Preferably, the angle between the trailer and the ground surface will be between 0° and 75°, more preferably between 0° and 45°. By means of the above-mentioned moveable floor combined with the tilting trailer, products can be moved from the trailer and for example transferred to a waiting transferring device.
The separating device will preferably be hingedly suspended to the trailer. As a result, the latter can also function as a closing flap for the trailer, in which the separating device will close off the trailer when folded, and will provide passage for the products when unfolded.
In a preferred embodiment of the invention, during use, the separating device is mounted in an angle of 0-20° inclined with respect to the floor of the trailer, more preferably in an angle between 0° and 11°. The angle variation can be set based on the contamination degree of the products in which a smaller angle of inclination is suitable for heavily soiled products and a larger angle of inclination is appropriate for less soiled products. According to the invention, rolling bodies are provided in the separating device. The term "rolling bodies" refers in the present invention to objects that are rolling around an axis such as (smooth) rolls, spiral rolls, diabolo rolls, star rolls etc. According to the invention, the rolls are arranged adjacently on parallel axes to constitute together a roller bed. In a further preferred embodiment, the rolling bodies are configured to carry out a rotation movement directed to the backside of the separating device, that exercises at least once a reinforced transport starting force on the harvested plant products and the possible admixtures. As a result, there will be a good separation of the loose admixtures such as soil and the products and a thin layer of products will be obtained.
In a preferred embodiment of the invention, the rolling bodies are placed at a fixed distance from one another, preferably between 10 and 30 mm.
In an alternative preferred embodiment of the invention, the rolling bodies can be placed at a variable distance from one another, preferably between 10 and 30 mm, by means of a telescopic scissor system. The device can be provided with a minimum of 5 to 50 rolling bodies, more preferably between 5 and 20 rolling bodies. The length of the roller bed is preferably between 0.5 to 2 m.
The rolling bodies can optionally end in a conveyor belt, which is mounted at the side of the rolling bodies, and span at least partially the width of the roller bed and the trailer. In a preferred embodiment, the length of the conveyor belt will be equal to minimum half of the width of the trailer, and maximum 3/4 of the width. The direction of the conveyor belt will be perpendicular to that of the flow of delivered harvested products. As a result thereof, the harvested products will be concentrated to a flow with limited diameter, in which all products are brought together to one specific point, after which they can be deposited into a waiting second transferring device. By concentrating the flow of products, any falling damage (such as dents) to the products is limited.

In a preferred embodiment of the invention, the separating device also comprises a discharge belt for discharging the admixtures. This discharge belt is preferably provided underneath the roller bed. The movement direction of the conveyor belt will here be opposite to the movement direction of the roller bed, as a result of which the admixtures are transported in a direction away from the products. As a result, admixtures that fall between the openings in the roller bed, will be discharged in a direction opposite to the direction of the products.
In another, further preferred embodiment, the discharge belt will be able to move in two directions, in which one direction is opposite to the direction of the roller bed. A second movement direction is equal to the direction of the roller bed. The movement direction of the conveyor belt can be set by the user, dependent on the specific needs. Typically, the device will be set such that the admixtures are discharged in a direction opposite to that of the plant products. However, in circumstances in which the plant products contain few or no undesired admixtures (for example a situation in which potatoes have not been soiled), one can choose to collect the products falling through the roller bed nevertheless onto the conveyor belt (e.g. small potatoes) together with the plant products. In these circumstances, the movement direction of the conveyor belt will be equal to that of the roller bed.
In one embodiment, the discharge belt is attached fixedly to the roller bed. In another embodiment, the roller bed and the discharge belt are attached variably, in which the angle that is formed between the roller bed and the discharge belt, can be adjusted, and thus also the speed with which the admixtures are discharged. In particular, the angle can be set between 5 and 75°, more in particular between 5 and 45°.
The roller bed is preferably self-cleaning. This can be achieved by variably setting the rotational speed of the roller bed, by which an increased rotational speed will cause the particles and plant parts to be removed. Preferably, the rotational speed of the rolls during transport of the plant products and the separation of the admixtures will be between 1 and 250 rotations/minute, more preferably between 50 and 250 rotations/minute. For the self-cleaning function, this rotational speed is increased, preferably between 500 and 1500 rotations/minute, more preferably between 750 and 1200 rotations/minute, such as 1000 rotations/minute.
In a preferred embodiment, the admixtures will be brought to a collection means by means of the discharge belt. In a preferred embodiment of the invention, the collection means is coupled to the backside of the moveable frame. More in particular, the collection means will be attached to the undercarriage of the device. Preferably, the collection means extends substantially along the complete width of the moveable frame. The collection means will in particular be a tub, a barrel, a container or a reservoir with an opening suitable for receiving the admixtures. In a further embodiment, the collection means can be provided with an unloading system, allowing unloading of the admixtures again after collection. A similar unloading system can consist of a loading flap provided at the side or the underside of the collection means. In particular, the opening of the loading flap can be controlled, in which a large or small opening regulates the flow rate of the admixtures to be unloaded. In another preferred embodiment, the collection means can be provided with a tipping system, in which the collection means is pivotable around an axis and can thus unload the admixtures.
By coupling the collection means to the moveable frame of the device, the admixtures can be collected locally during loading of a transferring means. As a result, the products can immediately be cleaned and separated from the undesired admixtures, which can moreover immediately be spread over the original field again.
In another or further embodiment, the device according to the present invention will be provided with an additional conveyor belt, suitable for leading the mixtures away at the lateral side of the device. This additional conveyor belt can, similar to the collection means, be provided at the moveable frame, and is thus appropriate for receiving admixtures which fall from the conveyor belt at the level of the roller bed. In another, more preferred embodiment, the additional conveyor belt is mounted at, more preferably underneath, the first conveyor belt which receives the admixtures and it leads the admixtures away from the side of the device.
The transferring direction of this additional conveyor belt will preferably be perpendicular to that of the first conveyor belt, as a result of which the admixtures are led away at the lateral side of the device to the ground surface.
The device can further be provided with a cloth or wall for guiding the admixtures to the collection means, for example in circumstances in which there is a lot of wind. It also prevents the devices from becoming dirty during the operations.
The device can also be provided with a door, which is mounted at the level of the end of the trailer, at the side where the separation between the harvested product and the admixtures takes place. This door is preferably mounted between the trailer and the separating device. Preferably, the door is mounted hingedly to the trailer, by means of hinging points provided at the sides of the trailer, and it can be folded up upwardly.

This door ensures that the separating device can be used in a modular way. When a user needs it, he can mount it in an easy way onto the device. When separation is not desired (e.g. when the device is used for other purposes), this separating device can be demounted, in which the door ensures that the trailer is closed off. In a second aspect, the invention provides a method for separating, unloading and collecting harvested plant products and possible other remaining admixtures, such as soil, clods, stones, foliage or similar material. In particular, the separating, unloading and collecting will be carried out simultaneously. As a result, the efficient and economic processing of just harvested products becomes possible. More in particular, one will make use of a height-adjustable trailer that is provided with a separating device for separating the harvested plant products from the remaining admixtures.
In a preferred embodiment of the invention, the separation comprises the following steps:
- receiving the harvested plant products and possible remaining admixtures on rotating rolling bodies of a separating device; and
- at least partially passing the admixtures to a discharge belt that discharges the admixtures in the direction of the collection means.
In a preferred embodiment of the invention, unloading comprises a step of disposing the cleaned plant products to a further transferring means, such as a further road or railway vehicle.
In a preferred embodiment of the invention, the collecting comprises a step of receiving the admixtures in a collection means that is placed at a moveable frame. In a preferred embodiment of the invention, the separating comprises unloading and collecting harvested plant products and possible remaining admixtures and/or an at least partially automatic, computer-implemented operation, for example by using a PLC control (Programmable Logic Controller). According to the invention, the method will be carried out by means of an overload trailer according to any of claims 1-9. In a third aspect, the present invention provides a separating device that is configured for attachment to and co-action with a height adjustable load container of an overload trailer according to any of claims 1-9, comprising a roller bed and a discharge belt. In particular, the discharge belt will be mounted at the roller bed, and will extend underneath this roller bed. More preferably, the movement direction of the discharge belt will be opposite to the movement direction of the roller bed.

This separating device serves for transport and receipt of admixtures that are separated from the harvested products. This device can be mounted as a module onto existing moveable devices to transform it to a transfer device according to the present invention.

In a further embodiment, the separating device will also comprise a collection means for the admixtures. This collection means can preferably be mounted onto the moveable frame of the moveable device. In particular, the collection means will be provided with an unloading system, such as a loading flap, that allows to unload the admixtures in a controlled way.

The further characteristics of the separating device were already described thoroughly above and are also applicable to the separating device, which can be mounted as a module.

In a further preferred embodiment, the separating device can be provided as a kit, in which the kit, in addition to the separating device, optionally also comprises a door, that is appropriate for mounting to the trailing and in which the door can close off the trailer. In particular, the door will be mounted hingedly to the trailer and can be folded up upwardly.

### Detailed description of the figures

The invention will now be further described by means of the following example, without being limited thereto.

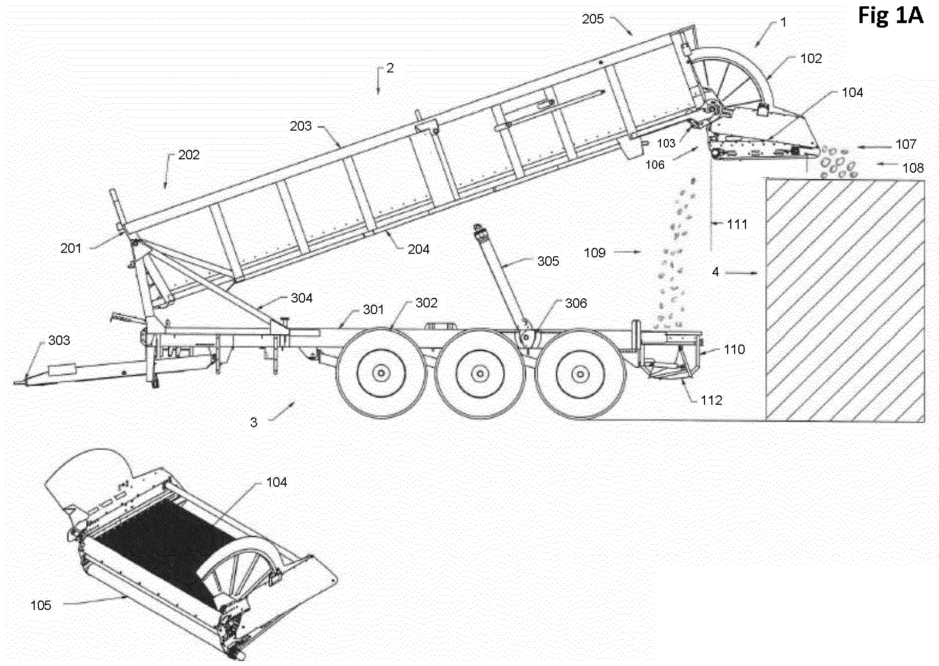

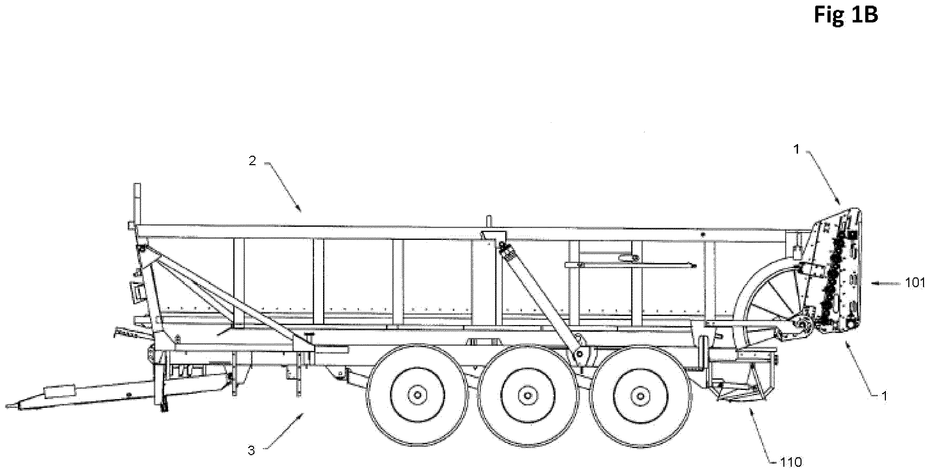

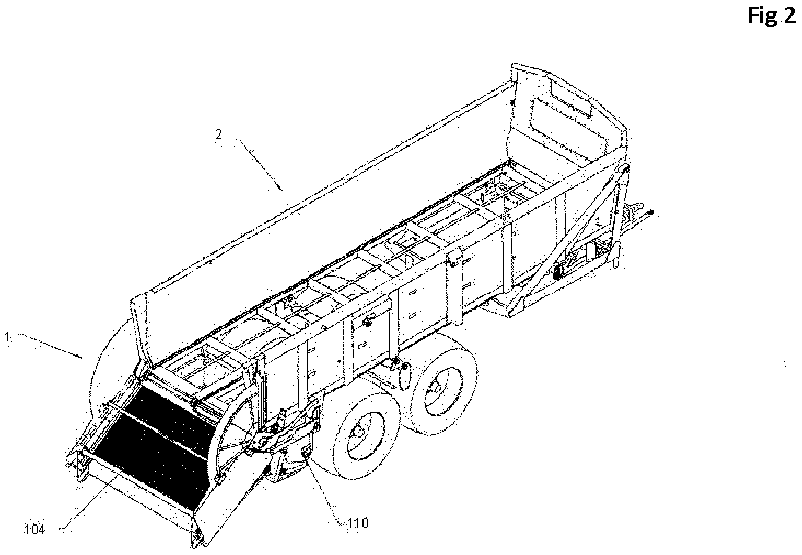

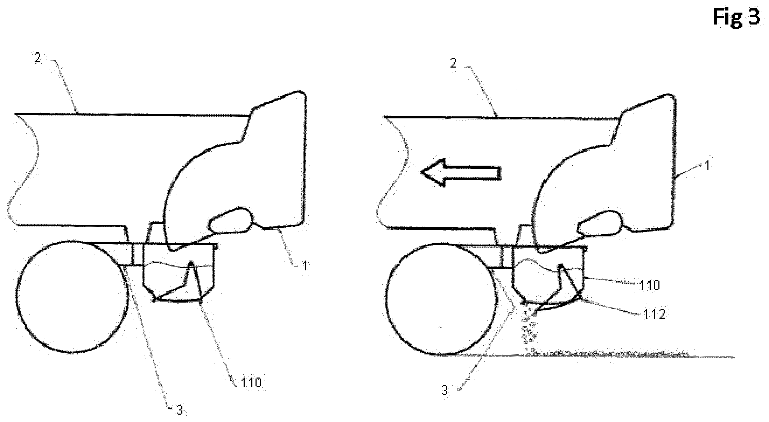

**Figures 1 to 3** show embodiments of a device according to the invention, in particular a transfer device for the transfer of harvested plant products from a harvester to a further transferring means, such as a further road or railway vehicle, provided with a moveable frame onto which a loading container (2) is provided with means for the discharge of the harvested products to a discharge end of the device, in which at the discharge end, a separating device (1) is provided for separating the harvested plant products from possible remaining admixtures, such as soil, clods, stones, foliage or similar material.

The loading container (2) can be completely stand-alone, or as is illustrated here, can be placed onto a moveable frame (3), such as a trailer for intermodal transport, which trailer can be pulled by a tractor, truck, etc.

The moveable frame comprises a chassis (301) with one or more wheel axles (302), a towing hook (303), supporting rods (304) to support the loading container (2) at its front side, means for lifting the loading container (2) such as, preferably, two hydraulic rods (305), and a hinging point (306) that couples the hydraulic rods (305) to the chassis (301).

The loading container (2) comprises a front wall (201) at the material supply end (202), two side walls (203), a moveable bottom plate (204) driven by a drive chain and a material discharge end (205) at the backside, where the loading container (2) is also provided with the separating device (1).

The separating device (1) is hingedly suspended to the loading container (2) and comprises two parallel side plates (102), a rotational axis (103) coupled to the loading container (2), backwards driven rotating rolling bodies (104), e.g. standard smooth rolling bodies, spiral rolls, diabolo rolls, star rolls, and a forwards driven rotating discharge belt (105).

The rolling bodies (104) are arranged adjacently on parallel axes and carry out a rotation movement directed to the backside of the separating device, which exercises at least once a reinforced transport starting force on the harvested plant products and the possible admixtures. Under the rolling bodies (104), there is a falling end for the admixtures (106) at the front side and a falling end for the products (107) at the backside.

At the falling end for the products (107), the cleaned plant products (108) are pushed out by the driven rolling bodies (104), after which they are collected in a lower product collection container (4), e.g. a road or railway transport container or a part thereof.

At the falling end for admixtures (106) at the front side, admixtures (109) are discharged by the frontwards driven rotating discharge belt (105), after which these admixtures (109) can optionally be collected in a lower collection means (110), that is coupled in the present embodiment to the backside of the moveable frame (3) and essentially extends over the full width of the moveable frame.

At the falling end for the admixtures (106), the separating device (1) can be provided with a flexible cloth or rigid wall (111) for guiding the admixtures (109) to the collection means (110). This cloth or this wall (111) can also be coupled to the lower collection means (110).

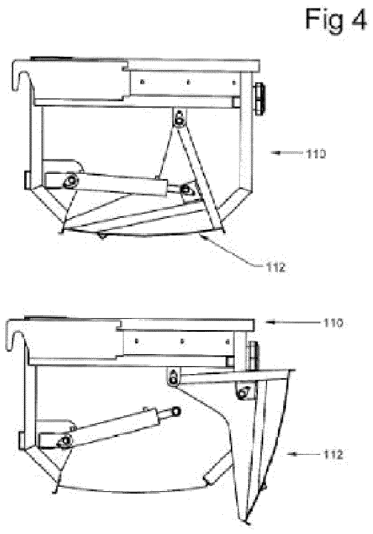

The collection means (110) is provided at the underside with an unloading system (112), to discharge the admixtures (109) at a desired location, in the present embodiment e.g. by opening a loading flap. Figure 4 shows a detail of a collection means according to an embodiment of the present invention, in which the collection means is provided with an adjustable loading flap (112).

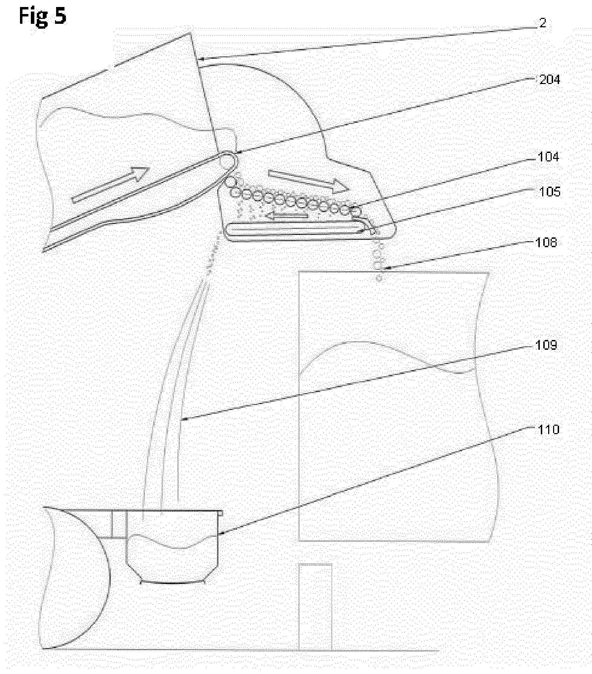

By using the above-mentioned illustrated device, the separation, unloading and collection of harvested plant products and optionally remaining admixtures can be carried simultaneously. This is illustrated in figure 5, which schematically illustrates the operation of the device and the method according to an embodiment of the present invention.

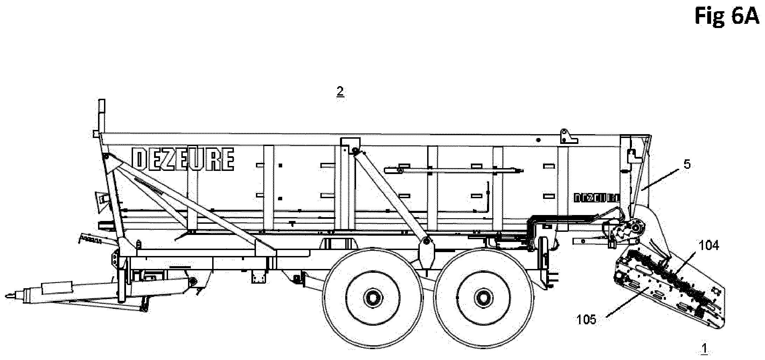

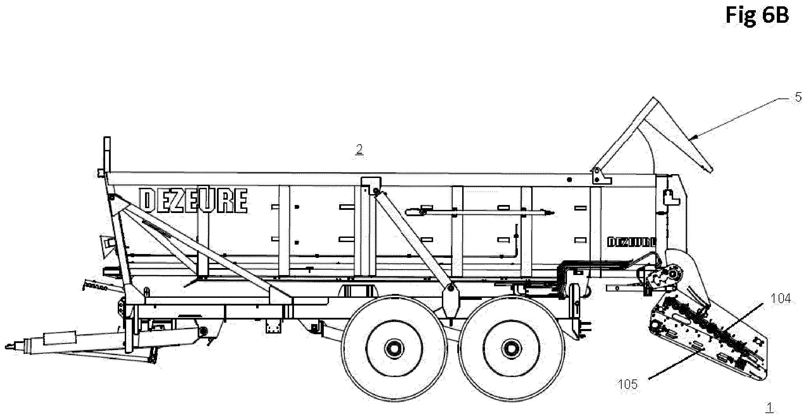

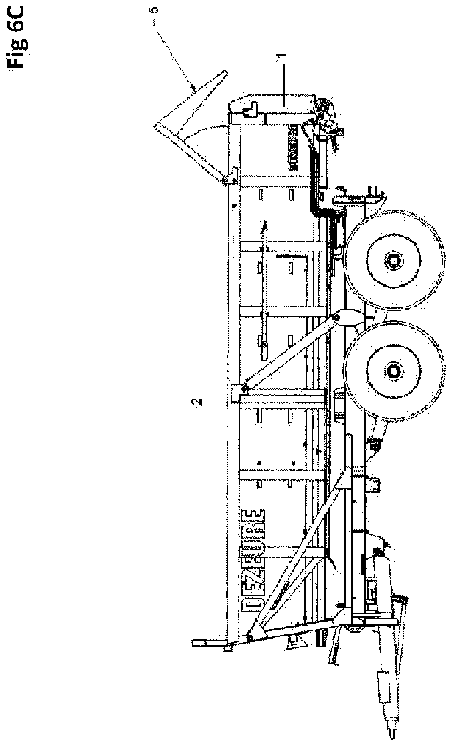

Figures 6A to 6C show a device according to the present invention, in which a door (5) is provided between the loading container (2) and the separating device (1). This door is attached hingedly to the side wall of the loading container, and can close off the backside of the loading container (2). If unloading of the load is desired, the door (5) will be placed in an open position, as shown in figure 6B. As described above, the loading container (2) can also be closed off by means of the separating device (see figure 6C). By providing an additional door between the loading container (2) and the separating device (1), a user can, when he does not need the separating device, dismount it easily, in which the door (5) will take over the function of closing off the loading container (2). The device can thus be used modularly, both with and without separating device (1).

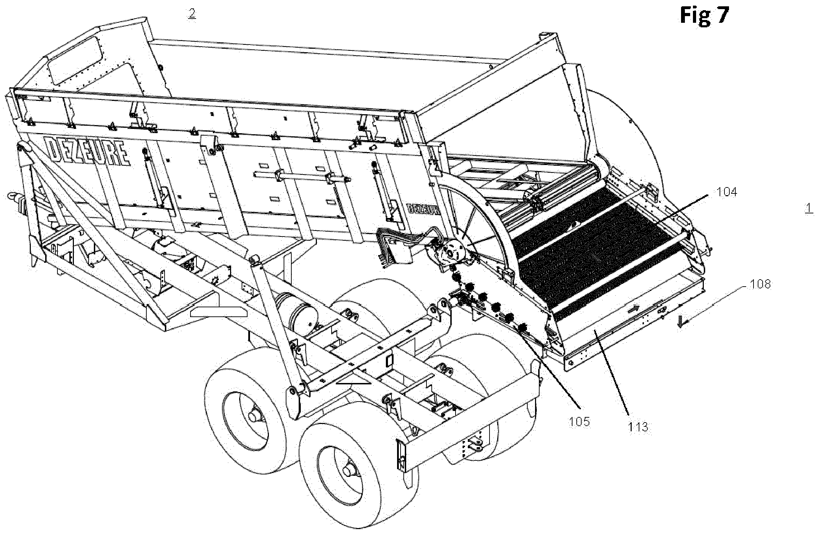

Figure 7 shows a further embodiment according to the present invention, in which the separating device (1) is provided with an additional conveyor belt (113), mounted behind and preferably a little underneath the roller bed that is formed by the rolling bodies (104) (thus at the level of the falling end for the products 107). This conveyor belt (113) extends in the longitudinal direction over at least a part of the width of the roller bed, but preferably not over the full width. The direction of the conveyor belt is perpendicular to the direction of the product flow (108). As a result, the products that leave the rolling bodies (104) at the level of the conveyor belt (113), will end up on this conveyor belt (113) to subsequently concentrate the product flow at a specific point. This limits the width of the product flow, as a result of which dents to the product due to falling, are limited. The arrows in figure 7 show the movement direction of the products, in which a part of the products will move along the conveyor belt (113), and a second part will come directly from the rolling bodies (104).

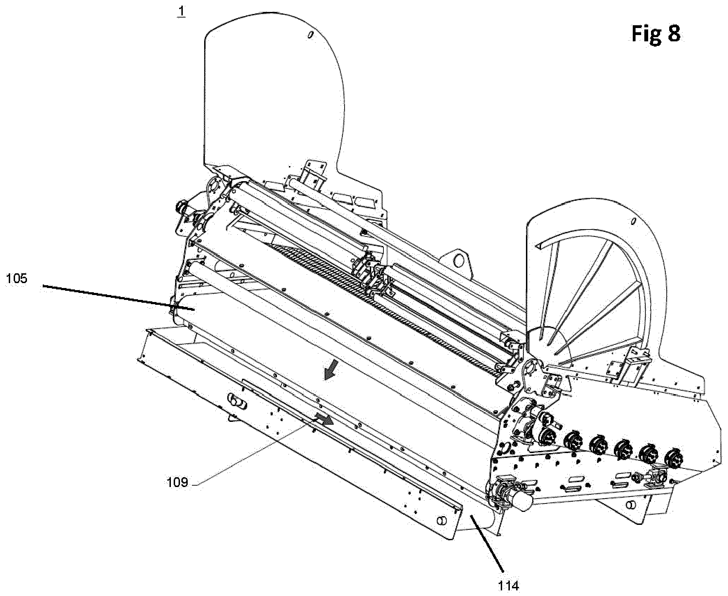

Figure 8 shows a separating device (1) that offers an alternative for the collection means (110) for the admixtures. In this embodiment, the admixtures are not collected, but they are discharged laterally of the device, by means of a conveyor belt (114) that is mounted behind the conveyor belt (105) and of which the direction of the conveyor belt (114) is perpendicular to the direction of the conveyor belt (105). The admixtures will hereby fall through the rolling bodies (104), onto the conveyor belt (105) that will lead them away to the backside of the device (side of the loading container). Subsequently, the admixtures end up onto the second conveyor belt (114) that leads the admixtures away laterally.

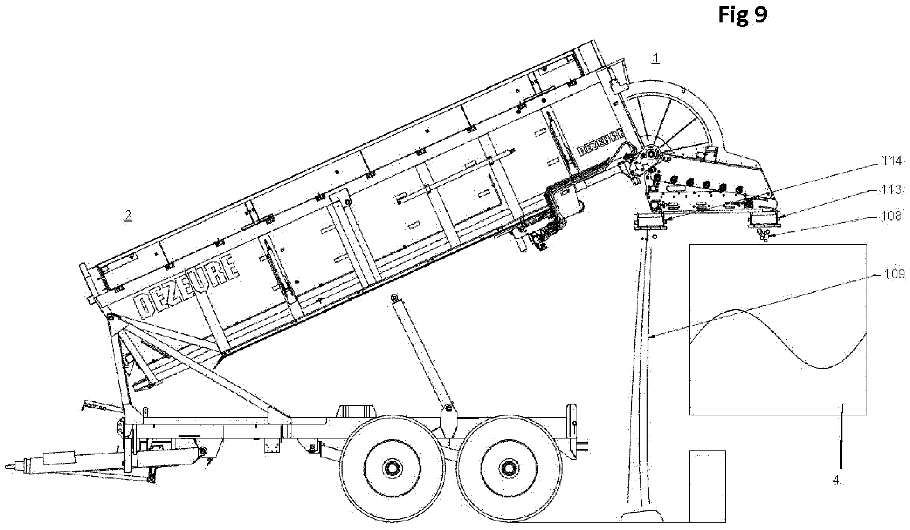

Figure 9 shows an overview drawing of 2. an overload trailer provided with a separating device as shown in figure 8, in which the admixtures are lead away laterally at the backside of the separating device (1), by means of a conveyor belt (114), while the product flow is brought to a waiting loading wagon/product collection container (4).

## Claims

1. An overload trailer for transferring harvested plant products of a harvester to a further transferring means, such as a further road or railway transport, provided with a moveable frame (3) onto which a loading container (2) is provided, in which the loading container (2) is provided with means (305) for lifting the loading container in an angle with respect to the ground surface, whereby the loading container (2) is further provided with means (204) for the discharge of the harvested products to a discharge end (205) of the overload trailer, in which at the discharge end (205) of said trailer, a separating device (1) is provided for separating the harvested plant products from remaining admixtures, such as soil, clods, stones, foliage or similar material, **characterised in that** said separating device (1) is provided with rolling bodies (104) that are arranged adjacently on parallel axes and together form a roller bed.

2. The overload trailer according to claim 1, **characterised in that** a collection means (110) is provided underneath the separating device (1) for collecting the admixtures and/or an additional conveyor belt (114) for discharging the admixtures at the lateral side of the trailer.

3. The overload trailer according to previous claims 1 or 2, **characterised in that** the means for discharging the harvested products comprise a moveable floor.

4. The overload trailer according to one of the previous claims 1-3, **characterised in that** the separating device (1) is suspended hingedly to the loading container (2).

5. The overload trailer according to one of the previous claims 1-4, **characterised in that** said rolling bodies (104) are configured to carry out a rotation movement oriented to the backside of the separating device (1).

6. The overload trailer according to claim 5, **characterised in that** a discharge belt (105) is provided underneath the rolling bodies (104) that will discharge the admixtures in the direction of the collection means (110).

7. The overload trailer according to previous claims 2-6, **characterised in that** the collection means (110) is coupled to the backside of the moveable frame (3).

8. The overload trailer according to previous claim 7, **characterised in that** the collection means (110) essentially extends over the full width of the moveable frame (3) and is provided with an unloading system (112).

9. The overload trailer according to one of the previous claims 5 to 8, **characterised in that** the separating device (1) comprises a conveyor belt (113), mounted to the rolling bodies.

10. A method for separating, unloading and collecting harvested plant products and possible still remaining admixtures, such as soil, clods, stones, foliage or similar material, **characterised in that** the separating, unloading and collecting occurs simultaneously and by means of the overload trailer according to any of the previous claims, which overload trailer is provided with a separating device (1) for separating the harvested plant products from the remaining admixtures.

11. Method according to previous claim 11, **characterised in that** the separation comprise the following steps:
- receiving the harvested plant products and possible remaining admixtures onto rotating rolling bodies (104) of the separating device (1); and
- at least partially passing the admixtures to a discharge belt (105) that discharges the admixtures in the direction of a collection means (110); and
- transferring the cleaned plant products to a further transferring means, such as a further road or railway transport.

12. Method according to one of the previous claims, **characterised in that** the collection comprises a step of receiving the admixtures in a collection means (110) that is placed at a moveable frame (3).

13. A separating device (1) configured for attachment to and co-action with a height-adjustable loading container of an overload trailer according to any of claims 1-9, **characterised in that** the separating device (1) comprises a roller bed and a discharge belt (105), mounted to the roller bed and extending thereunder, appropriate for the transport and receipt of admixtures that have been separated from the harvested products.

14. Separating device (1) according to claim 13, **characterised in that** the movement direction of the discharge belt (105) is opposite to that of the roller bed.

15. Separating device (1) according to claim 13 or 14, **characterised in that** the separating device (1) further comprises a collection means (110), mountable onto a moveable frame (3) of the overload trailer and appropriate for collecting admixtures, which have been discharged by the discharge belt (105).

## Patentansprüche

1. Ein Überladeanhänger zur Übergabe von geernteten Pflanzenprodukten einer Erntemaschine zu einem weiteren Übergabemittel, wie einem weiteren Straßen- oder Eisenbahntransport, versehen mit einem beweglichen Rahmen (3), an dem ein Ladebehälter (2) vorgesehen ist, in dem der Ladebehälter (2) mit Mitteln (305) zum Anheben des Ladebehälters in einem Winkel in Bezug auf die Bodenfläche versehen ist, wobei der Ladebehälter (2) ferner mit Mitteln (204) zum Entladen der geernteten Produkte zu einem Austragsende (205) des Überladeanhängers versehen ist, in dem am Austragsende (205) des Anhängers eine Trennvorrichtung (1) zum Abtrennen der geernteten Pflanzenprodukte von den übrigen Zuschlagstoffen, wie Erde, Schollen, Steinen, Laub oder ähnlichem Material, **dadurch gekennzeichnet, dass** die Trennvorrichtung (1) mit Wälzkörpern (104) versehen ist, die benachbart auf parallelen Achsen angeordnet sind und zusammen ein Rollenbett bilden.

2. Der Überladeanhänger nach Anspruch 1, **dadurch gekennzeichnet, dass** unterhalb der Trennvorrichtung (1) ein Sammelmittel (110) zum Sammeln der Zuschlagstoffe und/oder ein zusätzliches Förderband (114) zum Entladen der Zuschlagstoffe an der lateralen Seite des Anhängers vorgesehen ist.

3. Der Überladeanhänger nach den vorhergehenden Ansprüchen 1 oder 2, **dadurch gekennzeichnet, dass** die Mittel zum Entladen der geernteten Produkte einen beweglichen Boden umfassen.

4. Der Überladeanhänger nach einem der vorhergehenden Ansprüche 1-3, **dadurch gekennzeichnet, dass** die Trennvorrichtung (1) gelenkig an dem Ladebehälter (2) aufgehängt ist.

5. Der Überladungsanhänger nach einem der vorhergehenden Ansprüche 1-4, **dadurch gekennzeichnet, dass** die Wälzkörpern (104) ausgebildet sind, um eine Drehbewegung auszuführen, die auf die Rückseite der Trennvorrichtung (1) gerichtet ist.

6. Der Überladeanhänger nach Anspruch 5, **dadurch gekennzeichnet, dass** unterhalb der Wälzkörper (104) ein Abfuhrband (105) vorgesehen ist, das die Zuschlagstoffe in Richtung des Sammelmittels (110) entladen wird.

7. Der Überladeanhänger nach den vorhergehenden Ansprüchen 2-6, **dadurch gekennzeichnet, dass** das Sammelmittel (110) mit der Rückseite des beweglichen Rahmens (3) gekoppelt ist.

8. Der Überladeanhänger nach dem vorhergehenden Anspruch 7, **dadurch gekennzeichnet, dass** sich das Sammelmittel (110) im Wesentlichen über die volle Breite des beweglichen Rahmens (3) erstreckt und mit einem Entladesystem (112) versehen ist.

9. Der Überladeanhänger nach einem der vorhergehenden Ansprüche 5 bis 8, **dadurch gekennzeichnet, dass** die Trennvorrichtung (1) ein an den Wälzkörpern montiertes Förderband (113) umfasst.

10. Ein Verfahren zum Trennen, Entladen und Sammeln von geernteten Pflanzenprodukten und eventuell noch verbleibenden Zuschlagstoffen, wie Erde, Schollen, Steinen, Laub oder ähnlichem Material, **dadurch gekennzeichnet, dass** das Trennen, Entladen und Sammeln gleichzeitig und mittels des Überladeanhängers gemäß einem der vorhergehenden Ansprüche erfolgt, welcher Überladeanhänger mit einer Trennvorrichtung (1) zum Trennen der geernteten Pflanzenprodukte von den verbleibenden Zuschlagstoffen versehen ist.

11. Verfahren nach dem vorhergehenden Anspruch 11, **dadurch gekennzeichnet, dass** die Trennung die folgenden Schritte umfasst:
- Aufnehmen der geernteten Pflanzenprodukte und eventueller verbleibender Zuschlagstoffe auf rotierende Wälzkörper (104) der Trennvorrichtung (1); und
- zumindest teilweises Hindurchführen der Zuschlagstoffe zu einem Abfuhrband (105), das die Zuschlagstoffe in der Richtung eines Sammelmittels (110) entlädt; und
- Übergeben der gereinigten Pflanzenprodukte zu einem weiteren Übergabemittel, wie einem weiteren Straßen- oder Eisenbahntransport.

12. Verfahren nach einem der vorhergehenden Ansprüche, **dadurch gekennzeichnet, dass** die Sammlung einen Schritt des Aufnehmens der Zuschlagstoffe in einem Sammelmittel (110) umfasst, das an einem beweglichen Rahmen (3) platziert ist.

13. Eine Trennvorrichtung (1), die zur Befestigung an und zum Zusammenwirken mit einem höhenverstellbaren Ladebehälter eines Überladeanhängers nach einem der Ansprüche 1-9 ausgebildet ist, **dadurch gekennzeichnet, dass** die Trennvorrichtung (1) ein Rollenbett und ein Abfuhrband (105), das an dem Rollenbett angebracht ist und sich darunter erstreckt, das für den Transport und die Aufnahme von Zuschlagstoffen, die von den geernteten Produkten abgetrennt worden sind, geeignet ist, umfasst.

14. Trennvorrichtung (1) nach Anspruch 13, **dadurch gekennzeichnet, dass** die Bewegungsrichtung des Abfuhrband (105) derjenigen des Rollenbettes entgegengesetzt ist.

15. Trennvorrichtung (1) nach Anspruch 13 oder 14, **dadurch gekennzeichnet, dass** die Trennvorrichtung (1) ferner ein Sammelmittel (110) umfasst, das auf einem beweglichen Rahmen (3) des Überladeanhängers montierbar ist und zum Sammeln von Zuschlagstoffen, die durch das Abfuhrband (105) entladen worden sind, geeignet ist.

## Revendications

1. Remorque débardeuse élévatrice pour transférer des produits végétaux récoltés d'une moissonneuse vers un autre moyen de transfert, tel qu'un autre transport routier ou ferroviaire, muni d'un châssis mobile (3), sur lequel un conteneur de chargement (2) est prévu, dans lequel le conteneur de chargement (2) est pourvu de moyens (305) pour soulever le conteneur de chargement en formant un angle par rapport à la surface du sol, moyennant quoi le conteneur de chargement (2) est en outre pourvu de moyens (204) pour décharger les produits récoltés vers une extrémité de déchargement (205) de la remorque débardeuse élévatrice, dans laquelle, au niveau de l'extrémité de déchargement (205) de ladite remorque, un dispositif de séparation (1) est prévu pour séparer les produits végétaux récoltés des adjuvants restants, tels que la terre, les mottes, les pierres, les feuillages ou des matériaux similaires, **caractérisé en ce que** ledit dispositif de séparation (1) est pourvu de corps roulants (104) qui sont agencés de manière adjacente sur des axes parallèles et forment ensemble un plateau à rouleaux.

2. Remorque débardeuse élévatrice selon la revendication 1, **caractérisé en ce qu'**un moyen de collecte (110) est prévu sous le dispositif de séparation (1) pour recueillir les adjuvants et/ou une bande transporteuse supplémentaire (114) pour décharger les adjuvants sur le côté latéral de la remorque.

3. Remorque débardeuse élévatrice selon les revendications précédentes 1 ou 2, **caractérisé en ce que** les moyens pour décharger les produits récoltés comprennent un plancher mobile.

4. Remorque débardeuse élévatrice selon l'une quelconque des revendications 1 à 3, **caractérisé en ce que** le dispositif de séparation (1) est suspendu de manière articulée sur le conteneur de chargement (2).

5. Remorque débardeuse élévatrice selon l'une des revendications précédentes 1 à 4, **caractérisé en ce que** lesdits corps roulants (104) sont configurés pour effectuer un mouvement de rotation orienté vers l'arrière du dispositif de séparation (1).

6. Remorque débardeuse élévatrice selon la revendication 5, **caractérisé en ce qu'**une courroie de déchargement (105) est prévue sous les corps roulants (104) qui déchargeront les adjuvants en direction du moyen de collecte (110).

7. Remorque débardeuse élévatrice selon les revendications précédentes 2 à 6, **caractérisé en ce que** le moyen de collecte (110) est couplé à l'arrière du châssis mobile (3).

8. Remorque débardeuse élévatrice selon la revendication précédente 7, **caractérisé en ce que** le moyen de collecte (110) s'étend sensiblement sur toute la largeur du châssis mobile (3) et est pourvu d'un système de déchargement (112).

9. Remorque débardeuse élévatrice selon l'une des revendications précédentes 5 à 8, **caractérisé en ce que** le dispositif de séparation (1) comprend une bande transporteuse (113) montée sur les corps roulants.

10. Procédé de séparation, de déchargement et de collecte de produits végétaux récoltés et d'adjuvants restants éventuels, tels que le terre, les mottes, les pierres, les feuillages ou des matériaux similaires, **caractérisé en ce que** la séparation, le déchargement et la collecte ont lieu simultanément et au moyen de la remorque débardeuse élévatrice selon l'une quelconque des revendications précédentes, laquelle remorque débardeuse élévatrice est pourvu d'un dispositif de séparation (1) pour séparer les produits végétaux récoltés des adjuvants restants.

11. Procédé selon la revendication 11, **caractérisé en ce que** la séparation comprend les étapes suivantes :
- recevoir les produits végétaux récoltés et les éventuels adjuvants restants sur des corps roulants rotatifs (104) du dispositif de séparation (1) ; et
- faire passer au moins partiellement les adjuvants vers une courroie de déchargement (105) qui décharge les adjuvants dans la direction d'un moyen de collecte (110) ; et
- transférer les produits végétaux nettoyés vers un autre moyen de transfert, tel qu'un autre transport routier ou ferroviaire.

12. Procédé selon l'une des revendications précédentes, **caractérisé en ce que** la collecte comprend une étape de réception des adjuvants dans un moyen de collecte (110) qui est placé sur un châssis mobile (3).

13. Dispositif de séparation (1) configuré pour être fixé à un conteneur de chargement réglable en hauteur d'une remorque débardeuse élévatrice selon l'une quelconque des revendications 1 à 9, et coagir avec celui-ci, et **caractérisé en ce que** le dispositif de séparation (1) comprend un plateau à rouleaux et une courroie de déchargement (105), montée sur la plate-forme à galets et s'étendant sous celle-ci, appropriés pour le transport et la réception d'adjuvants qui ont été séparés des produits récoltés.

14. Dispositif de séparation (1) selon la revendication 13, **caractérisé en ce que** la direction de déplacement de la courroie de déchargement (105) est opposée à celle de la plate-forme à galets.

15. Dispositif de séparation (1) selon la revendication 13 ou 14, **caractérisé en ce que** le dispositif de séparation (1) comprend en outre un moyen de collecte (110), montable sur un châssis mobile (3) de la remorque débardeuse élévatrice, et approprié pour collecter des adjuvants été qui ont été déchargés par la courroie de déchargement (105).
